## Europäisches Patentamt
## European Patent Office
## Office européen des brevets

(19)

(11) Veröffentlichungsnummer : **0 050 216**
**B1**

(12) **EUROPÄISCHE PATENTSCHRIFT**

(45) Veröffentlichungstag der Patentschrift :
**09.01.85**

(51) Int. Cl.⁴ : **C 25 D 11/10, C 25 D 11/08, C 25 D 11/12, B 41 N 1/04**

(21) Anmeldenummer : **81107424.4**

(22) Anmeldetag : **18.09.81**

(54) **Verfahren zur anodischen Oxidation von Aluminium und dessen Verwendung als Druckplatten-Trägermaterial.**

(30) Priorität : **26.09.80 US 188091**
**26.09.80 US 188092**

(43) Veröffentlichungstag der Anmeldung :
**28.04.82 Patentblatt 82/17**

(45) Bekanntmachung des Hinweises auf die Patenterteilung : **09.01.85 Patentblatt 85/02**

(84) Benannte Vertragsstaaten :
**AT BE CH DE FR GB IT LI NL SE**

(56) Entgegenhaltungen :
**CH-A-   585 802**
**DE-A- 2 243 178**
**DE-A- 2 624 385**
**US-A- 3 945 895**
**US-A- 4 022 670**

(73) Patentinhaber : **AMERICAN HOECHST CORPORATION**
**Route 202-206 North**
**Somerville, N.J. 08876 (US)**

(72) Erfinder : **Gillich, Thomas N.**
**3 Little Brook Rd.**
**Whitehouse Station New Jersey 08889 (US)**
Erfinder : **Walls, John E.**
**46 Center Street**
**Annandale New Jersey 08801 (US)**
Erfinder : **Wanat, Stanley F.**
**3 Frances Lane**
**Scotch Plains New Jersey 07076 (US)**
Erfinder : **Rozell, William J.**
**1173 Mount Horeb Rd.**
**Martinsville New Jersey 08836 (US)**

(74) Vertreter : **Euler, Kurt Emil, Dr. et al**
**KALLE Niederlassung der Hoechst AG Rheingaustrasse 190 Postfach 3540**
**D-6200 Wiesbaden 1 (DE)**

## Beschreibung

Die Erfindung betrifft ein Verfahren zur anodischen Oxidation von Aluminium in einem eine Säure enthaltenden Elektrolyten und die Verwendung des Verfahrensprodukts als Druckplatten-Trägermaterial.

Bei der Bearbeitung von Aluminium oder seinen Legierungen, beispielsweise in Form von Bändern, Folien oder Platten, zeichnete sich in den letzten Jahrzehnten ein Trend zur steten Verbesserung der Aluminiumoberfläche ab, um diese für die unterschiedlichsten Anwendungsgebiete (z. B. für architektonische Zwecke oder für die Herstellung von Druckplatten) vorzubereiten. Zu den verschiedensten Eigenschaften, die dabei in Bezug auf die Oberfläche erzielt werden sollen, zählen beispielsweise : Korrosionsbeständigkeit, Aussehen, Dichte, Härte, Verschleißfestigkeit, Aufnahmefähigkeit und Haftung für Lack- oder Kunstharzüberzüge, Färbbarkeit, Glanz usw. Dabei verlief die Entwicklung von walzblankem Aluminium ausgehend über chemische, mechanische und elektrochemische Oberflächen-Behandlungsverfahren, wobei auch Kombinationen der verschiedenen Verfahren in der Praxis Anwendung finden.

Insbesondere bei der Bearbeitung von solchem band-, folien- oder plattenförmigen Material aus Aluminium oder seinen Legierungen, das als Trägermaterial für (Flachdruck-) Druckplatten Verwendung finden soll, hat sich als vorläufiger Abschluß der technischen Entwicklung die Kombination einer meist mechanischen oder elektrochemischen Aufrauhstufe mit einer nachfolgenden Behandlungsstufe durch anodische Oxidation der aufgerauhten Aluminiumoberfläche durchgesetzt. Es können jedoch auch — je nach gewünschter Druckauflage der behandelten Druckplatte — anodische Oxidationen auf solchen Aluminiummaterialien durchgeführt werden, die keiner separaten Aufrauhbehandlung unterworfen worden sind, sie müssen dann lediglich eine Oberfläche aufweisen, auf der eine genügend haftfeste Aluminiumoxidschicht durch die anodische Oxidation erzeugt werden kann, wobei diese ihrerseits eine gute Haftung für eine aufzubringende lichtempfindliche Schicht bieten sollte.

Anodische Schichten auf (Flachdruck-) Druckplatten eignen sich vor allem zur besseren Führung des Feuchtwassers (= erhöhte Hydrophilie) und zur Erhöhung des Widerstandes gegen Abrieb und damit beispielsweise zur Verhinderung des Verlustes von druckenden Teilen auf der Oberfläche während des Druckvorganges und weisen außerdem beispielsweise eine erhöhte Haftfestigkeit gegenüber der lichtempfindlichen Schicht auf.

Aus dem Stand der Technik sind die folgenden Standardmethoden zur anodischen Oxidation von Aluminium in $H_2SO_4$ enthaltenden wäßrigen Elektrolyten bekannt (s. dazu z. B. M. Schenk, Werkstoff Aluminium und seine anodische Oxydation, Francke Verlag — Bern, 1948, Seite 760 ; Praktische Galvanotechnik, Eugen G. Leuze Verlag — Saulgau, 1970, Seiten 395 ff. und Seiten 518/519 ; W. Hübner und C. T. Speiser, Die Praxis der anodischen Oxidation des Aluminiums, Aluminium Verlag — Düsseldorf, 1977, 3. Auflage, Seiten 137 ff.), wobei sich $H_2SO_4$ als die für die meisten Anwendungsgebiete brauchbarste Elektrolytsäure herausgestellt hat :

— Das Gleichstrom-Schwefelsäure-Verfahren, bei dem in einem wäßrigen Elektrolyten aus üblicherweise ca. 230 g $H_2SO_4$ pro 1 l Lösung bei 10° bis 22 °C und einer Stromdichte von 0,5 bis 2,5 A/dm² während 10 bis 60 min anodisch oxidiert wird. Die Schwefelsäurekonzentration in der wäßrigen Elektrolytlösung kann dabei auch bis auf 8 bis 10 Gew.-% $H_2SO_4$ (ca. 100 g $H_2SO_4$/l) verringert oder auch auf 30 Gew.-% (365 g $H_2SO_4$/l) und mehr erhöht werden.

— Die « Hartanodisierung » wird mit einem wäßrigen, $H_2SO_4$ enthaltenden Elektrolyten einer Konzentration von 166 g $H_2SO_4$/l (oder ca. 230 g $H_2SO_4$/l) bei einer Betriebstemperatur von 0° bis 5 °C, bei einer Stromdichte von 2 bis 3 A/dm², einer steigenden Spannung von etwa 25 bis 30 V zu Beginn und etwa 40 bis 100 V gegen Ende der Behandlung und während 30 bis 200 min durchgeführt.

Zu den anderen — außer Schwefelsäure — bekannten Elektrolyten in einstufigen Oxidationsverfahren von Metallen wie Aluminium oder in Vorbehandlungsstufen vor der eigentlichen Oxidation zählen u. a. die in den folgenden Druckschriften genannten :

In der DE-PS 607 012 wird die anodische Oxidation von Aluminium in wäßrigen Lösungen von Oxalsäure oder Chromsäure beschrieben. Die Oxidationsprodukte dienen als Träger für lichtempfindliche, in die Oxidschicht einzulagernde Stoffe (wie Silberhalogenide) für die spätere Herstellung von Schriftzeichen oder Bildern. Ein ähnliches Verfahren wird in der US-PS 2 115 339 beschrieben. In der DE-PS 607 474 wird auch Oxalsäure in wäßriger Lösung als Elektrolyt verwendet ; es sind daneben noch Zusätze wie organische Säuren erwähnt, diese werden jedoch nicht näher spezifiziert. Diese Oxidationsprodukte sollen sich gut für Färbezwecke eignen.

Der Elektrolyt bei der anodischen Oxidation von Aluminium gemäß der DE-PS 623 847 enthält neben Schwefelsäure sulfonierte Phenole. Die bei der Oxidation entstehenden Poren können auch noch z. B. mit Fetten verschlossen werden, die Reaktionsprodukte sollen sich gut für Färbezwecke eignen. In der DE-PS 825 937 werden als Zusatz zu Schwefelsäure oder Phosphorsäure bei dem anodischen Glänzen von Aluminium Sulfonsäuren von aromatischen Kohlenwasserstoffen genannt. Nach der DE-PS 12 51 616 dient ein wäßriger Elektrolyt mit einem Gehalt an Schwefelsäure und 1,8-Dihydroxynaphthalin-3,6-sulfonsäure zur Färbung von Aluminium durch anodische Oxidation. Die Färbung gemäß der DE-PS 12 60 266 (= US-PS 3 227 639) wird in einem wäßrigen Elektrolyten erzielt, der 4-Sulfophthalsäure oder 5-Sulfoisophthalsäure neben Schwefelsäure enthält. In der DE-AS 14 46 002 wird eine gleichmäßig gefärbte Aluminiumoxidschicht in einem wäßrigen Elektrolyten auf der Basis von Schwefelsäure und Sulfosalicylsäure erreicht. Ebenfalls für die anodische Färbung von Aluminium verwendet man gemäß der DE-AS 15 21 016 einen wäßrigen Elektrolyten mit einem Gehalt an Naphthalindisulfonsäure und Schwefelsäure. Aus der DE-OS 27 13 985 ist es bekannt, für den gleichen Anwendungszweck Sulfofumarsäure einzusetzen. Die Anwendung von mehrbasischen aromatischen Sulfonsäuren wie Sulfophthalsäure oder Sulfosalicylsäure neben Schwefelsäure oder Phosphorsäure in wäßrigen Elektrolyten zur Herstellung von anodischen Oxidschichten auf Druckplattenträgern aus Aluminium wird in der US-PS 4 022 670 beschrieben.

Eine lithographische Druckplatte wird nach der DE-OS 16 71 614 (= US-PS 3 511 661) so hergestellt, daß ein Aluminiumträger in wäßriger Phosphorsäure anodisch oxidiert wird. Die Oberfläche ist nach der Oxidation aus Zellen aufgebaut, die Öffnungen mit einer Breite von 150 bis $750 \cdot 10^{-10}$ m haben. Ein ähnliches Verfahren beschreiben auch die US-PS 3 594 289 oder die DE-OS 25 07 386, wobei jedoch in der DE-OS ausdrücklich eine Wechselspannung eingesetzt wird, auch Polyphosphorsäuren können im wäßrigen Elektrolyten vorhanden sein.

In der DE-AS 20 00 227 (= US-PS 3 658 662) wird ein Verfahren zur anodischen Oxidation von Aluminium in einer wäßrigen Natriumsilikatlösung beschrieben, wobei das dabei entstehende Material als Druckplatten-Trägermaterial geeignet sein soll.

Aus der US-PS 3 672 972 ist die gleichzeitige anodische Oxidation von Aluminium und die Bildung von Boehmit in der Oxidschicht in wäßrigen Elektrolyten bekannt, die Oxalsäure, Schwefelsäure, Phosphorsäure, Malonsäure, ein Sulfosalicylsäure/Schwefelsäure-Gemisch und Aluminationen enthält ; die Oberfläche soll verbesserte Haftfähigkeit besitzen.

Aluminiumplatten mit einem bestimmten Zink- und Kupfergehalt nach der US-PS 3 915 811 werden in einem wäßrigen 3-Komponen-Elektrolyten anodisch oxidiert, der Phosphorsäure, Schwefelsäure und eine organische Monocarbonsäure wie Essigsäure enthält.

In der US-PS 3 988 217 wird ein Verfahren beschrieben, bei dem gleichzeitig eine anodische Oxidation von Aluminium und eine Beschichtung mit einem Harz stattfindet ; der wäßrige Elektrolyt enthält ein aliphatisches Amin oder ein quaternäres Ammoniumsalz und ein Harz. Das Reaktionsprodukt soll eine in der Haftung und der Korrosionsfestigkeit verbesserte Oberfläche aufweisen.

Der wäßrige Anodisier-Elektrolyt zur Vorbereitung der späteren Ablagerung von Metallsalzen auf Aluminium gemäß der US-PS 4 115 211 enthält neben einem wasserlöslichen Schwermetallsalz eine wasserlösliche Säure wie Oxalsäure, Weinsäure, Citronensäure, Malonsäure, Maleinsäure, Schwefelsäure, Phosphorsäure, Sulfaminsäure oder Salpetersäure.

In der DE-PS 647 427 wird eine anodische Vorbehandlung von Aluminium vor dem Aufbringen einer Oxidschicht beschrieben, bei der eine Elektrolyse in einer solchen wäßrigen Lösung durchgeführt wird, die in der Hauptsache eine einbasische organische Säure wie Essigsäure und daneben Schwefelsäure oder Phosphorsäure und gegebenenfalls Borsäure enthält. Das Verfahren wird als lösendes Reinigungsverfahren beschrieben.

Die Vorbehandlung von Aluminium vor dem anodischen Aufbringen einer Oxidschicht nach der DE-PS 703 314 wird in einem Elektrolyten eines pH-Wertes von 4 bis 10 durchgeführt. Der Elektrolyt enthält Alkalisalze organischer Säuren wie Weinsäure oder Citronensäure. Die Anwendung solcher Elektrolyten für die Herstellung von Druckplatten mit aufzubringenden lichtempfindlichen Schichten beschreibt die US-PS 3 756 826.

Aus der US-PS 2 703 781 ist ein wäßriger Elektrolyt zur anodischen Oxidation von Aluminium bekannt, der Schwefelsäure und Phosphorsäure enthält. In der DE-OS 27 07 810 (= US-PS 4 049 504) wird der Einsatz dieses Verfahrens bei der Herstellung von Druckplatten-Trägermaterialien beschrieben.

Das Verfahren zum Färben von Aluminium durch anodische Oxidation gemäß der DE-PS 11 78 272 wird mit einem wäßrigen Elektrolyten durchgeführt, der in der Hauptsache Sulfosalicylsäure und daneben Schwefelsäure und Maleinsäure oder Maleinsäureanhydrid enthält. In der DE-OS 14 96 719 wird für den gleichen Anwendungszweck ein Elektrolyt aus Weinsäure, Schwefelsäure oder einem Sulfat und Sulfaminsäure, Sulfosalicylsäure oder Sulfophthalsäure eingesetzt. Harte anodisch erzeugte Oxidschichten auf Aluminiumlegierungen mit einem Gehalt an mindestens 1 % Kupfer werden nach der DE-AS 22 43 178 (= US-PS 3 804 731) in solchen Elektrolyten auf der Basis von aromatischen Sulfonsäuren und Schwefelsäure gewonnen, die auch noch Oxalsäure oder Maleinsäure enthalten können.

Die anodische Färbung von Aluminium gemäß des DE-OS 14 96 722 wird in einem wäßrigen Elektrolyten durchgeführt, der a) eine mindestens dibasische organische Carbonsäure u. a. aus der Gruppe Malonsäure, Weinsäure, Citronensäure, Diglykolsäure, Äpfelsäure, Bernsteinsäure, Glutarsäure, Itakonsäure, Maleinsäure, Pyromellithsäure (Benzoltetracarbonsäure), Trimellithsäure (Benzoltricarbonsäure), Citrakonsäure, Acetylendicarbonsäure, Akonitsäure, Glyoxylsäure und Phthalsäure und b) Oxalsäure oder Glyoxylsäure enthält.

Auch zwei- und mehrstufige Oxidationsverfahren oder einstufige Oxidationsverfahren mit nichtoxidierend wirkenden Nachbehandlungsstufen sind aus dem Stand der Technik bekannt, dazu zählen beispielsweise die folgenden :

In der DE-PS 629 629 wird ein Verfahren zur anodischen Oxidation von Aluminium beschrieben, bei dem die Oberfläche zuerst in Schwefelsäure und anschließend in einer organischen Säurelösung (Malonsäure oder Oxalsäure) elektrolytisch behandelt wird.

Druckplatten-Trägermaterialien werden gemäß der DE-AS 14 71 707 (= US-PS 3 181 461) so hergestellt, daß anodisch erzeugte Aluminiumosidschichten noch mit Füllstoffen wie Silikaten, Bichromaten, Oxalaten oder Farbstoffen in wäßriger Lösung nachbehandelt werden. In der DE-PS 16 21 478 (= US-PS 4 153 461) wird für das gleiche Anwendungsgebiet Polyvinylphosphonsäure in wäßriger Lösung eingesetzt. Eine elektrochemische Silikatisierung von bereits anodisch oxidierten Druckplattenträgern aus Aluminium unter anodischen Bedingungen wird in der DE-OS 25 32 769 (= US-PS 3 902 976) beschrieben.

In einem anodischen Färbeverfahren von Aluminium nach der DE-AS 14 96 874 wird in einer ersten Stufe ein wäßriger Elektrolyt auf der Basis von Schwefelsäure und in einer zweiten Stufe ein solcher auf der Basis von Schwefelsäure und Sulfosalicylsäure, Sulfophthalsäure, Ligninsulfonsäure oder Resorcinsulfonsäure eingesetzt.

Aus der DE-OS 22 11 553 (= US-PS 3 900 370) ist eine nichtelektrolytische Nachbehandlung (Verdichtung) von anodisch erzeugten Aluminiumoxidschichten mit solchen Phòsphonsäuren wie 1-Hydroxyethan-1,1-diphosphonsäure oder N,N,N-Amino-trimethanphosphonsäure bekannt, die mit 2-wertigen Kationen wie $Ca^{2+}$ Komplexe bilden können.

Nach der zunächst erfolgenden anodischen Oxidation von Aluminium wird gemäß der DE-AS 25 20 955 ein wäßriges Bad zur elektrolytischen Einfärbung der Oxidschicht mit Wechselstrom angewendet, das farbgebende Metallsalze und Phosphonsäuren in einer Menge von 0,5 bis 200 g/l enthält. Zu den Phosphonsäuren zählen insbesondere aminosubstituierte Mono- der Polyphosphonsäuren wie Aminomethanphosphonsäure, n-Propylamino-di(methanphosphonsäure) oder Hydrazin-tetra(methanphosphonsäure). Diese Verbindungen sollen als « Sperrschichtbildner » gegenüber dem bereits anodisch oxidierten Aluminium dienen, wozu sonst häufig Borsäure, Citronensäure oder Weinsäure eingesetzt werden.

In der DE-OS 28 05 219 (= US-PS 4 090 880) wird ein Verfahren zur Herstellung von anodisch oxidierten Druckplattenträgern aus Metallen (insbesondere Aluminium) beschrieben, bei dem vor und gegebenenfalls nach der Oxidationsstufe das Trägermaterial mit einer hydrophilierenden Verbindung wie einem Silikat, Kieselsäure, Polyacrylsäure, einem Zirkoniumfluorid oder Fluorzinkoniumsäure in wäßriger Lösung behandelt wird.

Hydrophobe Aluminiumoxidschichten auf hydratisiertem Aluminium werden gemäß der DE-AS 28 36 878 so hergestellt, daß in einer ersten anodischen Oxidationsstufe in einem wäßrigen Elektrolyten auf der Basis von Ammoniak, Citronensäure und Phosphorsaüre und in einer zweiten anodischen Oxidationsstufe in einem wäßrigen Elektrolyten auf der Basis von Azelainsäure (1,9-Nonandisäure) gearbeitet wird. Diese Reaktionsprodukte werden als Elektrolytkondensatoren eingesetzt.

Aus der US-PS 3 940 321 ist eine zweistufige anodische Oxidation von Druckplatten-Trägermaterialien aus Aluminium bekannt, wobei zunächst in Schwefelsäure und dann in Phosphorsäure gearbeitet wird.

Die bisher bekannten Verfahren auf der Basis von Schwefelsäure liefern zwar für viele Anwendungsgebiete brauchbare Oxidschichten auf Aluminium, weisen jedoch beispielsweise bei ihrer Anwendung für die Herstellung von Trägermaterialien für Druckplatten einige Nachteile auf. Dazu zählen einerseits die erhöhte Anfälligkeit der danach erzeugten Schichten gegen Alkali und die « Schleierbildung » und andererseits die insbesondere bei der « Hartanodisierung » aufzuwendende Energie zum Erreichen und Konstanthalten der niedrigen Elektrolyttemperaturen und die für die ökonomisch günstige kontinuierliche Anodisierung von Aluminium relativ hohen Verweilzeiten des Aluminiums im Elektrolyten. Auch der Phosphorsäure als alleinigem Elektrolyten oder in Mischungen kam bisher für großtechnisch brauchbare Anodisierverfahren keine oder nur eine untergeordnete Bedeutung zu. Das Schichtwachstum führt bei dieser Säure nur zu verhältnismäßig dünnen Schichten. Diese dünnen Schichten sind jedoch nicht so dicht, daß sie beispielsweise als Formierschichten für Kondensatoren mit z. B. aus Boraten oder Citronensäure erzeugten Schichten in Konkurrenz treten könnten (s. dazu M. Schenk, Werkstoff Aluminium und seine anodische Oxydation, Francke Verlag Bern, 1948, Seite 324). Das starke Rücklösevermögen von Phosphorsäure für Aluminiumoxid bietet nicht nur eine mögliche Erklärung für dieses Verhalten (M. Schenk, Seite 385), sondern auch dafür, daß dickere und auch abriebfeste Oxidschichten unter wirtschaftlich vertretbaren Bedingungen nicht oder nur unter erschwerten Bedingungen herzustellen sind. Auf dieses Rücklösevermögen ist wahrscheinlich auch die großporige Struktur der in Phosphorsäure hergestellten Oxidschichten (M. Schenk, Seite 585) und die geringere Abriebfestigkeit dieser Schichten zurückzuführen.

Die anodischen Oxidschichten auf Aluminium können zwei Haupttypen angehören. Es gibt einerseits die sogenannte Sperrschicht, die entsteht, wenn der beim Anodisieren verwendete Elektrolyt nur ein geringes Lösevermögen für das Oxid hat. Solche Schichten sind im wesentlichen nicht porös, und ihre Dicke ist auf etwa $13 \cdot 10^{-10}$ m/Volt beschränkt. Sobald diese begrenzende Dicke erreicht ist, besteht im allgemeinen eine wirksame Sperre gegen den weiteren Ionen- oder Elektronenfluß. Der Strom fällt bis auf einen niedrigen Leitfähigkeitswert ab, und die Oxidschichtbildung hört auf. Als Elektrolyten für dieses Verfahren dienen beispielsweise Borsäure und Weinsäure.

Wenn der Elektrolyt andererseits eine ausreichende Lösewirkung auf das Oxid ausübt, erreicht die Sperrschicht nicht ihre Grenzdicke, d. h. der Strom kann weiterfließen und seine Wirkung führt zu einer « porösen », Oxidstruktur.

Poröse Schichten können ziemlich, d. h. einige $10^{-7}$ m dick werden, wobei jedoch an der Grenzfläche Metall/Metalloxid immer eine dünne Oxidsperrschicht bestehen bleibt. Untersuchungen mit dem Elektronenmikroskop zeigen, daß durch die gesamte Oxidschicht hindurch Milliarden von dichtgepackten Zellen aus amorphem Oxid vorhanden sind, die im allgemeinen senkrecht zur Metall/Metalloxid-Grenzfläche ausgerichtet sind. Schwefelsäure ist in diesen Fällen der gebräuchlichste Elektrolyt, aber auch Phosphorsäure wird verwendet. Anodisch erzeugte Schichten aus Aluminiumoxid sind härter als an der Luft oxidierte Oberflächenschichten.

Nach den verschiedensten der oben beschriebenen Verfahren hergestelltes anodisch oxidiertes Aluminium ist in der Praxis anzutreffen. Insbesondere die nach der anodischen Oxidation noch zusätzlich bezüglich ihrer Haftung und Struktur beeinflußten Materialien sind auch auf dem Druckplattengebiet im Einsatz, dennoch sind gewisse Verbesserungen noch wünschenswert. Dazu gehören z. B. die Verhinderung von sporadisch auftretenden Fehlstellen in der Oxidschicht oder beim Aufbringen der lichtempfindlichen Schicht, das Ausschalten von gelegentlichem, unvorhersehbarem vorzeitigem Bildzusammenbruch auf der Druckmaschine oder ein rascheres und zuverlässigeres Einfärben auf der Druckmaschine. Eine noch längere Standzeit auf der Druckmaschine ist wünschenswert, sowie eine Verfahrensverbesserung, die wirtschaftlicher durchzuführen ist, als die herkömmliche anodische Oxidation, nach der sehr häufig in einem anschließenden zweiten und damit zusätzlich auszuführendem Arbeitsgang als Vorstufe für das spätere Beschichten des Trägermaterials mit einer lichtempfindlichen Schicht versiegelt oder in anderer Form nachbehandelt wird. Für schützende und dekorative Zwecke sind, gegenüber bekannten Anodisierungsverfahren, eine verbesserte Korrosionsbeständigkeit und wirtschaftlichere Herstellung wünschenswert.

Aufgabe der Erfindung ist es deshalb, ein besonders wirtschaftliches Verfahren zur Herstellung von anodisch oxidiertem Aluminium vorzuschlagen, bei dem sowohl eine für die Praxis ausreichende Aluminiumoxid-Schicht entsteht, als auch eine Modifizierung (Versiegelung) der Poren dieser Schicht stattfindet, so daß die Verfahrensprodukte einerseits eine verbesserte Korrosionsbeständigkeit zeigen, um sie auch für beispielsweise architektonische Zwecke geeigneter zu machen, andererseits als Druckplatten-Trägermaterialien eingesetzt werden können, die eine verbesserte Haftfähigkeit zeigen, höhere Druckauflagen ergeben, zu einem geringeren Verschleiß auf der Druckmaschine führen, eine gesteigerte Lagerfähigkeit aufweisen und nicht zuletzt in ihrer Hydrophilie verbessert sind.

Die Erfindung geht aus von einem Verfahren zur anodischen Oxidation von platten-, folien- oder bandförmigem Material aus Aluminium oder seinen Legierungen in einem wäßrigen, mindestens eine insbesondere organische Säure enthaltenden Elektrolyten, gegebenenfalls nach vorhergehender mechanischer, chemischer und/oder elektrochemischer Aufrauhung. Das erfindungsgemäße Verfahren ist dadurch gekennzeichnet, daß als Säure Phytinsäure, Nitrilotriessigsäure, Phosphorsäure-mono(dodecyloxy-polyoxy-äthylen) ester, Tridecyl-benzolsulfonsäure, Dinitro-stilben-disulfonsäure, Dodecyl-naphthalin-disulfonsäure, Dinonyl-naphthalin-disulfonsäure, Di-n-butyl-naphthalindisulfonsäure, Äthylendiamintetraessigsäure, Hydroxy-äthyl-äthylediamin-triessigsäure oder ein Gemisch aus zwei oder mehreren dieser Säuren eingesetzt wird. Zusätzlich kann der wäßrige Elektrolyt anorganische Säure aus der Gruppe Phosphorsäure, Phosphorige Säure und einem Gemisch aus Phosphorsäure und Schwefelsäure oder Phosphoriger Säure enthalten.

Das erfindungsgemäße Verfahren kann kontinuierlich oder diskontinuierlich durchgeführt werden.

Die nach dem erfindungsgemäßen Verfahren zu behandelnden Materialien aus Aluminium werden im allgemeinen zuerst gereinigt, wozu verschiedenste organische Lösemittel oder wäßrig-alkalische Lösungen eingesetzt werden. Zur alkalischen Entfettung verwendet man beispielsweise wäßrige Natriumhydroxid-, Kaliumhydroxyd-, Trinatriumphosphat- und Natriumsilikat-Lösungen, die auch oberflächenaktive Mittel enthalten können. Aus Umwelt- und Gesundheitsgründen ist das Entfetten mit organischen Lösemitteln, z. B. mit Trichloräthylen, 1,1,1-Trichloräthan und Perchloräthylen, weniger gebräuchlich. Für Offsetdruckzwecke verwendbar und bevorzugt sind die Aluminiumlegierungen « Reinaluminium », 1100, 3003 und A-19, typische Analysen dieser Legierungen für den Offsetdruck in Gewichts-% sind wie folgt :

| Legierung | Al | Mg | Mn | Fe | Si | Cu | Zn | Ti |
|---|---|---|---|---|---|---|---|---|
| « Rein-Al » | $\geqq$ 99,5 | — | — | 0,4 | 0,3 | 0,02 | 0,07 | 0,03 |
| 1100 | 99,2 | — | — | 0,375 | 0,375 | 0,05 | — | — |
| 3003 | $\geqq$ 98,5 | — | 0,7 | 0,15 | 0,2 | 0,05 | 0,2 | 0,2 |
| A-19 | 98,3 | 0,9 | — | 0,375 | 0,375 | 0,05 | — | — |

Die metallische Oberfläche kann glatt oder aufgerauht sein. Zum Aufrauhen der Oberfläche können die üblichen Techniken angewendet werden. Dazu gehören u. a. das chemische Ätzen in alkalischen oder sauren Lösungen, das Körnen durch trockenes Abschleifen mit Metallbürsten, nasses Abschleifen mit Bürsten und Aufschlämmungen von Schleifpartikeln, Aufrauhen mit Kugeln und/oder das elektrochemische Aufrauhen in Salzsäure oder Salpetersäure. Die Oberflächenrauhigkeit und -struktur sind bei jedem dieser Verfahren unterschiedlich. Die mittlere Rauhtiefe $R_z$ kann im Bereich von etwa 1 bis 15 μm liegen.

Die Rauhtiefe wird dabei nach DIN 4768 in der Fassung vom Oktober 1970 ermittelt, die Rauhtiefe $R_z$ ist dann das arithmetische Mittel aus den Einzelrauhtiefen fünf aneinandergrenzender Einzelmeßstrecken. Die Einzelrauhtiefe ist definiert als der Abstand zweier Parallelen zur mittleren Linie, die innerhalb der Einzelmeßstrecke das Rauhheitsprofil am höchsten bzw. am tiefsten Punkt berühren. Die Einzelmeßstrecke ist der fünfte Teil der senkrecht auf die mittlere Linie projizierten Länge des unmittelbar zur Auswertung benutzten Teils des Rauhheitsprofils. Die mittlere Linie ist die Linie parallel zur allgemeinen Richtung des Rauhheitsprofils von der Form des geometrisch-idealen Profils, die das Rauhheitsprofil so teilt, daß die Summen der werkstofferfüllten Flächen über ihr und der werkstofffreien Flächen unter ihr gleich sind.

Die praktische Durchführung dieser Erfindung hat gezeigt, daß für beste Ergebnisse die saubere Oberfläche sofort weiter elektrolytisch behandelt werden sollte, bevor sich Luftoxid bilden kann. Ehe eine zuvor gereinigte, entfettete und gegebenenfalls aufgerauhte Platte nach dem erfindungsgemäßen Verfahren behandelt wird, kann sie noch zusätzlich geätzt werden, um Luftoxid zu entfernen. Dieses Ätzen kann mit den bekannten Ätzmitteln erfolgen, z. B. mit sauren und alkalischen Lösungen und anschließendem Abspülen. Ein Verfahren zum Entfernen von Luftoxid ist z. B. das Entschichten der Platte mit einer Phosphorsäure/Chromsäure-Lösung. Die metallische Oberfläche sollte daher unmittelbar nach dem Reinigen, Aufrauhen (falls dieser Schritt erwünscht ist) und Ätzen vorzugsweise mit Wasser abgespült und in noch nassem Zustand elektrolytisch behandelt werden, obwohl man auch brauchbare Erzeugnisse erhalten kann, wenn diese Vorsichtsmaßnahme nicht streng eingehalten wird.

Neben den weiter oben genannten Säuren kann der wäßrige Elektrolyt auch noch eine oder mehrere mehrbasische organische Säuren enthalten, wie sie in der gleichzeitig eingereichten Patentanmeldung 81 107 425.1 (EP-A-48909). In dieser Patentanmeldung weisen die mehrbasischen organischen Säuren mindestens fünf Säurefunktionen auf und gehören zur Gruppe der Phosphon-, Sulfon- oder Carbonsäuren.

Die mögliche Elektrolytkonzentration reicht von etwa 0,01 % bis zur Sättigung (Lösungen über etwa 30 % sind jedoch häufig wegen ihrer Viskosität unzweckmäßig), und sie ist nicht wesentlich von der chemischen Struktur abhängig. Bei Elektrolytkonzentrationen zwischen 1 % und 5 % ergeben sich kaum Unterschiede in den Eigenschaften der Erzeugnisse, und die charakteristischen Eigenschaften erhält man sogar noch bei 30 %. Weiterhin führt bei konstanter Spannung eine steigende Konzentration zu einem Abfall in der Wachstumsrate der Schichtdicke. Unter Berücksichtigung der erzielten Eigenschaften, der leichten Verarbeitung, der erreichten Schichtdicke und der Elektrolytkosten liegt der besonders bevorzugte Konzentrationsbereich zwischen etwa 0,8 % und etwa 5 %.

Das Verhältnis zwischen dem Gewicht der anodisch erzeugten Oxidschicht und der verwendeten Gleichstromspannung ist in etwa linear. Bei allen Spannungsstärken über etwa 5 V bewirkt die elektrolytisch aufgebrachte Schicht Korrosionsbeständigkeit und drucktechnische Eigenschaften, die dem Stand der Technik überlegen sind. Wenn die Spannung auf 70 V (Gleichstrom) gebracht wird, erhöht sich vermutlich aufgrund des größeren Schichtgewichts und der größeren Schichtdicke auch die Beständigkeit der Oxidschicht ; über 70 V verringert sich die Schichtbeständigkeit wieder, was man darauf zurückzuführen glaubt, daß die Schichtdichte verloren gegangen ist, weil die Durchschlagsfestigkeit der Schicht überschritten und die Schicht perforiert wurde. Diese Ansicht findet ihre Bestätigung bei Untersuchungen unter dem Durchstrahlungs-Elektronenmikroskop, bei denen man die Perforation erkennen kann. Die Korrosionsbeständigkeit wird also durch einen Betrieb unter 70 V begünstigt.

Mit Platten, bei denen die Elektrolyse mit geringeren Spannungen durchgeführt wurde, laufen die Druckpressenversuche länger. In einem Vergleichsversuch mit diazobeschichteten Aluminiumplatten, die bei 10, 20 bzw. 40 V elektrolytisch behandelt worden waren, war die Auflagenhöhe umgekehrt proportional zur Elektrolysespannung und zur Oxidschichtdicke. Die Ergebnisse der Druckversuche weisen nach, daß niedrigere Spannungen eine bessere Haftung an der lichtempfindlichen Schicht begünstigen, insbesondere bei Schichten auf Diazobasis, wobei der Bereich zwischen 1 V, insbesondere 10 V, 30 V bevorzugt ist. Für das Verfahren wird Gleichstrom bevorzugt, obwohl auch Wechselstrom überlagert werden kann ; besonders gut geeignet sind die Rechteckwellen von pulsierenden Stromquellen.

Die Stromstärke ist zu Beginn des erfindungsgemäßen Verfahrens am höchsten und fällt mit der Zeit ab, während sich die Oxidschicht auf der Metalloberfläche aufbaut und die Stromführungskapazität herabsetzt. Innerhalb von 30 s ist sie auf eine Stufe abgesunken, bei der der weitere Stromverbrauch minimal wird. Dies ist ein wichtiger Faktor für die Wirtschaftlichkeit des Verfahrens, da sich dann auch bereits eine brauchbare Schicht aufgebaut hat. Stromdichten von 1 bis 5, insbesondere 1,3 A/dm² bis 4,3 A/dm² kennzeichnen günstige Verfahrensbedingungen und werden bevorzugt.

Die Temperatur bei der Verfahrensdurchführung kann von etwa − 2 °C (nahe dem Gefrierpunkt der Elektrolyten) bis zu etwa 60 °C variieren. Aufgrund von Oberflächenhärteprüfungen, Beständigkeitsuntersuchungen der Oxidschicht, Bildhaftung, Hydrophilie und Alterungseigenschaften werden die besten Ergebnisse bei 10 °C erzielt. Der Leistungsabfall von 10 °C bis Raumtemperatur und sogar bis zu 40 °C ist jedoch nicht sehr groß. Der Betrieb bei sehr niedrigen Temperaturen würde eine kostspielige Kühlkapazität erfordern, aus diesem Grund wird ein Temperaturbereich zwischen etwa 10 °C und 35 °C vorgezogen, und ganz besonders bevorzugt wird mit einer Betriebstemperatur von etwa 20 °C bis 25 °C gearbeitet, weil dabei die Verfahrenswirtschaftlichkeit am größten und der Leistungsverlust am geringsten ist.

Mehr als 60 % der Aluminiumoxid-Schicht entstehen während der ersten 5 s (ca. 0,08 min) der anodischen Oxidation.

Für drucktechnische Anwendungen sind Zeitspannen von mehr als 5 min nicht angebracht, weil dann keine weitere Schicht erzeugt wird, sie sind jedoch nicht schädlich, solange die Spannung niedrig ist, wie oben erörtert. Eine Zeitspanne zwischen 0,16 min und 1 min wird bevorzugt.

Vom Verfahren her gesehen sind die kurze (Behandlungs-) Zeit, die niedrige Temperatur (Raumtemperatur, bei der kaum die Notwendigkeit einer zusätzlichen Heizung oder Kühlung besteht) und der geringe Stromverbrauch insgesamt günstige wirtschaftliche Faktoren, im Vergleich zum herkömmlichen zweistufigen Verfahren mit Anodisieren und anschließender charakteristischer Tauchbehandlung in der Wärme.

In der Ausführungsform des erfindungsgemäßen Verfahrens, bei der noch zusätzlich zu mindestens einer der angegebenen Säuren anorganische Säure zugegeben wird, werden bevorzugt folgende Verfahrensparameter beachtet :

Binäre Systeme aus Phosphorsäure mit den oben aufgeführten Säuren können Konzentrationen von etwa 10 g/l $H_3PO_4$ bis etwa 200 g/l $H_3PO_4$ haben. Vorzugsweise werden zwischen 20 g/l und 100 g/l $H_3PO_4$ eingesetzt und mindestens etwa 0,25 %, vorzugsweise mindestens etwa 0,5 % der angegebenen Säuren zugesetzt, um die oben beschriebenen Eigenschaften und Vorteile der anodisch oxidierten Aluminiumplatte zu gewährleisten. Bei ternären Systemen, in denen der Phosphorsäure Schwefelsäure oder Phosphorige Säure zugemischt wird, kann eine solche Mischung über den gesamten Bereich der Zusammensetzung variieren. Hohe Verhältnisse $H_2SO_4$ zu $H_3PO_4$ erfordern einen höheren Anteil an den aufgeführten Säuren, d. h. mehr als etwa 1 %, wenn die Nichtporosität sichergestellt werden soll. Ein sehr hohes Verhältnis $H_2SO_4$ zu $H_3PO_4$ kann jedoch die Bildung einer nichtporösen Schicht verhindern, bei geringeren Verhältnissen $H_2SO_4$ zu $H_3PO_4$ wird die Nichtporosität schon bei einem Anteil an den aufgeführten Säuren von etwa 0,5 % erreicht. Auf jeden Fall ist ein höherer Gehalt an den aufgeführten Säuren nicht schädlich. Wenn der Gehalt an anorganischer Säure gering genug ist, entsteht durch die elektrolytische Abscheidung in allen Fällen eine nichtporöse Beschichtung, die in erster Linie durch die Konzentration der aufgeführten Säuren bestimmt wird.

Die Stromzuführungskapazität erhöht sich rasch mit der Konzentration des Elektrolyten und führt zu kürzeren Verfahrenszeiten und geringem Spannungsbedarf. Das Verhältnis zwischen dem Gewicht der entstehenden Aluminiumoxidschicht und der verwendeten Gleichspannung ist in etwa linear. Bei allen Spannungen über etwa 5 V bewirkt die elektrolytisch abgeschiedene Schicht eine Korrosionsbeständigkeit und drucktechnische Eigenschaften, die den Erzeugnissen aus dem Stand der Technik überlegen sind.

Die Elektrolysespannungen können in einem Bereich von 5 V bis 75 V (Gleichstrom) und darüber liegen. Hohe Gewichte der elektrolytisch abzuscheidenden Oxidschicht erreicht man leichter in Gegenwart einer starken anorganischen Säure, wobei weder hohe Spannungen noch lange Behandlungszeiten erforderlich sind. Die erwünschten erfindungsgemäßen Erzeugnisse erzielt man, sowohl bei binären als auch bei ternären Systemen, vorzugsweise mit Spannungen von etwa 5 V bis etwa 40 V. Die Stromstärke ist eine abhängige Veränderliche, wobei die gleichbleibende Zusammensetzung des Elektrolyten und die Spannung die unabhängigen Veränderlichen sind. Stromdichten von 0,2 A/dm² bis zu 6 A/dm² kennzeichnen günstige Verfahrensbedingungen und werden bevorzugt. Die Temperatur bei dieser Verfahrensdurchführung kann ebenfalls von etwa − 2 °C (nahe dem Gefrierpunkt des Elektrolyten) bis zu etwa 60 °C variieren.

Es besteht auch die Möglichkeit, vor dem Aufbringen der Aluminiumoxidschicht nach dem erfindungsgemäßen Verfahren (d. h. unter Einsatz der aufgeführten Säuren), bereits eine anodische Oxidation des Aluminiummaterials nach einem der klassischen Verfahren, insbesondere mit wäßriger Schwefelsäure durchzuführen. In diesem Falle werden die Poren durch das nachfolgende erfindungsgemäße Verfahren versiegelt, so daß ebenfalls eine für die Praxis verbesserte Oberfläche entsteht.

Als Anwendungsgebiet für ein nach dem erfindungsgemäßen Verfahren anodisch oxidiertes Material kommt insbesondere seine Verwendung als Trägermaterial bei der Herstellung von eine lichtempfindliche Schicht tragenden Druckplatten in Frage. Dabei wird entweder beim Hersteller von vorsensibilisierten Druckplatten oder beim Beschichten eines Trägermaterials beim Verbraucher das Trägermaterial mit einer der folgenden lichtempfindlichen Massen beschichtet :

Als lichtempfindliche Schichten sind grundsätzlich alle Schichten geeignet, die nach dem Belichten, gegebenenfalls mit einer nachfolgenden Entwicklung und/oder Fixierung eine bildmäßige Fläche liefern, von der gedruckt werden kann.

Neben den auf vielen Gebieten verwendeten Silberhalogenide enthaltenden Schichten sind auch verschiedene andere bekannt, wie sie z. B. in « Light-Sensitive Systems » von Jaromir Kosar, John Wiley & Sons Verlag — New York, 1965 beschrieben werden : die Chromate und Dichromate enthaltenden Kolloidschichten (Kosar, Kapitel 2) : die ungesättigte Verbindungen enthaltenden Schichten, in denen diese Verbindungen beim Belichten isomerisiert, umgelagert, cyclisiert oder vernetzt werden (Kosar, Kapitel 4) ; die photopolymerisierbare Verbindungen enthaltenden Schichten, in denen Monomere oder Präpolymere gegebenenfalls mittels eines Initiators beim Belichten polymerisieren (Kosar, Kapitel 5) ; und die o-Diazo-chinone wie Naphthochinondiazide, p-Diazo-chinone oder Diazoniumsalz-Kondensate enthaltenden Schichten (Kosar, Kapitel 7). Zu den geeigneten Schichten zählen auch die elektrophotographischen Schichten, d. h. solche die einen anorganischen oder organischen Photoleiter enthalten. Außer den lichtempfindlichen Substanzen können diese Schichten selbstverständlich noch andere Bestandteile wie z. B. Harze, Farbstoffe oder Weichmacher enthalten.

Insbesondere können die folgenden lichtempfindlichen Massen oder Verbindungen bei der Beschichtung der nach dem erfindungsgemäßen Verfahren hergestellten Trägermaterialien eingesetzt werden : Iminochinondiazide, o-Chinondiazide und Kondensationsprodukte aromatischer Diazoniumverbindungen zusammen mit geeigneten Bindemitteln, wie sie z. B. in den US-PSen 3 175 906, 3 046 118, 2 063 631, 2 667 415 und 3 867 147 beschrieben sind, wobei die in dem zuletzt genannten Patent erwähnten Massen generell bevorzugt werden. Weiterhin geeignet sind Photopolymersysteme auf der Basis von äthylenisch ungesättigten Monomeren mit Photoinitiatoren, die auch noch polymere Bindemittel enthalten können. Außerdem sind Photodimerisationssysteme, wie z. B. Polyvinylcinnamate, und Systeme auf der Basis von Diallylphthalat-Präpolymeren geeignet. Derartige Systeme sind z. B. in US-PSen 3 497 356, 3 615 435, 3 926 643, 2 670 286, 3 376 138 und 3 376 139 beschrieben.

In der US-PS 3 902 976 wird der Einsatz einer Zinn-II-chlorid-Lösung zur Bestimmung der Dichte und der Alkaliresistenz der Oxidschicht beschrieben. Am Umschlagspunkt zeigt sich eine sichtbare Wasserstoffentwicklung mit anschließender Bildung von schwarzen Flecken. In herkömmlicher Weise mit Schwefelsäure und/oder Phosphorsäure als Elektrolyten anodisiertes Aluminium wird wegen seiner hervorragenden Witterungsbeständigkeit für architektonische Zwecke verwendet. Zinn-II-chlorid-Versuche an solchen Materialien dauern in der Regel etwa 4 bis 10 sec, wogegen die Versuchszeiten bei den Aluminiumplatten nach dieser Erfindung etwa 15 sec bei angewendeter 0,1 %iger Elektrolytlösung, bis zu mehr als 200 sec bei einer 5 %igen Elektrolytlösung, betragen. Man nimmt an, daß die Schichtdicke in einer Wechselbeziehung zur Korrosionsbeständigkeit steht, die die maßgebende Eigenschaft der zum Schutz und zur Verschönerung von Metallen aufgebrachten anodischen Schichten ist.

Das Schichtgewicht der wegen ihrer Entstehung auch « Organo-Metalloxid-Komplex » genannten Oxidschicht kann quantitativ durch Entschichten in einer wäßrigen Chromsäure/Phosphorsäure-Standardlösung (1,95 % $CrO_3$, 3,41 % $H_3PO_4$-85 %ig) bei ca. 82 °C in 15 min ermittelt werden.

Die Haftung der nach dem erfindungsgemäßen Verfahren erzeugten Schichten ist viel besser als von solchen, die nach der Tauchbehandlung in einer warmen Lösung, wie sie nach dem Stand der Technik im Anschluß an das Anodisieren durchgeführt wird, hergestellt werden. Durch eine wäßrige 1,0 n NaOH-Lösung wird eine thermisch durch Tauchen aufgebrachte Beschichtung zum größten Teil entfernt. Von einer elektrolytisch aufgetragenen Schicht wird dagegen praktisch nichts weggenommen. d. h. diese Schicht ist in Reagenzien von gleicher oder geringerer Aggressivität unlöslich.

Platten für den Offsetdruck werden nach dem elektrolytischen Aufbringen der Aluminiumoxidschicht und vor dem Beschichten mit einer lichtempfindlichen Schicht geprüft. Die Platte wird naß oder trocken eingefärbt, wobei der zuletzt genannte Versuch der strengere (problematischere) ist. Nach dem Einfärben wird die Platte unter fließendem Wasser abgespült oder mit Wasser besprüht und leicht überwischt. Die Leichtigkeit und Vollständigkeit, mit der sich die Druckfarbe entfernen läßt, ist ein Hinweis auf die Hydrophilie der Oberfläche.

Bei erfindungsgemäß hergestellten Platten, die trocken eingefärbt und in einem Ofen bei 100 °C nachgetrocknet worden waren, ließ sich die Druckfarbe vollständig abspülen. Platten, die entweder nicht anodisiert oder in herkömmlicher Weise anodisiert und dann durch eine nichtelektrolytische Tauchbehandlung modifiziert worden waren, zeigten dagegen, selbst nach der Alterung unter weniger strengen Bedingungen, ein « Tonen », das nicht rückgängig zu machen war.

Bei Einfärbeversuchen wurden Platten mit und ohne lichtempfindliche Beschichtungen in unterschiedlichen Zeiten und bei unterschiedlichen Temperaturen gealtert und dann auf die Beibehaltung ihrer hydrophilen Eigenschaften geprüft. An Platten mit verschiedenen lichtempfindlichen Diazobeschichtungen wurden durch Alterung die praktische Lichtempfindlichkeit, die Auflösung, die unveränderte Hydrophilie des Hintergrunds und das leichte Entwickeln überprüft.

Aufgrund von Versuchen, die mit unterschiedlichen Spannungen und Zeiten durchgeführt wurden, nimmt man an, daß die Schicht aus dem vermuteten Organo-Metalloxid-Komplex auf der metallischen Oberfläche als Kondensator wirkt. Solange die Durchschlagsfestigkeit während der Elektrolyse nicht überschritten wird, ergibt sich mit der Dauer der Zeit keine weitere Gewichtszunahme, die Schicht ist nicht unterbrochen, und die Zinn-II-chlorid-Versuchszeit bleibt konstant. Wird die Durchschlagsfestigkeit dagegen überschritten, tritt eine Perforation der Schicht ein, und die Schichtdichte geht verloren ; die Zinn-II-chlorid-Versuchszeit entspricht dieser Perforation.

Untersuchungen mit dem Durchstrahlungs-Elektronenmikroskop bei mindestens 55 000-facher Vergrößerung an erfindungsgemäß hergestellten Aluminiumoxidschichten zeigen keine Porosität der Oberfläche des Erzeugnisses auf, wogegen herkömlich anodisiertes Aluminium bereits bei 5 000-facher Vergrößerung die typische Porosität aufweist.

In den folgenden Beispielen und der vorstehenden Beschreibung beziehen sich %-Angaben — sofern nichts anderes angegeben ist — auf das Gewicht.

**0 050 216**

Beispiele 1 bis 10

Mehrere flächenförmige Abschnitte der Aluminiumlegierung 3003 mit den Maßen 17,75 cm · 19,0 cm · 0,05 cm wurden für die elektrolytische Behandlung vorbereitet. Dazu wurden sie zunächst auf beiden Seiten mit einem handelsüblichen, ein Tensid enthaltenden wäßrig-alkalischen Entfettungsmittel behandelt.

Der entfettete Aluminiumabschnitt wurde dann bei Raumtemperatur während 20 sec mit einer 1.0 n wäßrigen NaOH-Lösung geätzt. Nach dem Ätzen wurde der Aluminiumabschnitt gründlich mit Wasser abgespült und sofort in einen elektrisch isolierten Behälter, der mit einer 1,0 %igen wäßrigen Lösung einer der aufgeführten Säuren gefüllt war, eingesetzt. Zu beiden Seiten des Aluminiums wurden Bleielektroden angeordnet, deren Abmessungen den Abmessungen der Aluminiumplatte entsprachen. Die beiden Elektroden hatten jeweils einen Abstand von 10 cm von dem Aluminium. Es wurde eine Gleichstromquelle verwendet, wobei das Aluminium als Anode und die Bleielektroden als Kathoden geschaltet waren. Die Badtemperatur wurde auf 25 °C gehalten, die Gleichspannung betrug 60 V. Der Prozeß dauerte 30 sec, die Platte wurde aus dem Bad genommen und gut abgespült, anschließend wurde sie trockengetupft.

Mehrere Tropfen einer gesättigten $SnCl_2$-Lösung wurden auf die Oberfläche aufgebracht, das $SnCl_2$ reagiert mit dem Aluminium, sobald es die durch den elektrochemischen Prozeß erzeugte Schicht durchdrungen hat. Vereinzelte schwarze Flecken von metallischem Zinn zeigen das Versuchsende an.

Durch Entschichten mit einer Chromsäure/Phosphorsäurelösung wurde das Schichtgewicht des Aluminiumoxids ermittelt. Die Hydrophilie der Oberfläche wurde durch Auftragen einer Farbe mit starken Abriebeigenschaften ohne Zuhilfenahme von Wasser geprüft. Dazu wurde ein trockener Applikator verwendet. Die Testergebnisse können der nachfolgenden Tabelle entnommen werden, darin bedeuten :

C = ließ sich vollkommen sauber abspülen, für schwierige Anwendungen beim Offsetdruck geeignet
T = leicht getont bzw. gesprenkelt
S = getont, für Offsetdruck ungeeignet
CT = Ergebnis zwischen C und T

Tabelle

| Bsp. | Säure | $SnCl_2$-Test (sec) | Oxidschicht gewicht (mg/m²) | Färbe-test |
|---|---|---|---|---|
| 1 | Nitrilotriessigsäure | 45 | 87 | T |
| 2 | Phosphorsäure-mono(dodecyloxy-polyoxyäthylen)ester | 29 | 179 | C |
| 3 | Tridecyl-benzosulfonsäure | 61 | 232 | S |
| 4 | Dinonyl-naphthalin-disulfonsäure | 47 | 222 | T |
| 5 | 2,2'-Dinitro-4,4'-stilbendisulfonsäure | 53 | 237 | CT |
| 6 | Dodecyl-naphthalin-disulfonsäure | 52 | 211 | T |
| 7 | Di-n-butyl-naphthalin-disulfonsäure | 46 | 217 | T |
| 8 | Äthylendiamintetraessigsäure | 43 | 162 | CT |
| 9 | Hydroxyäthyl-äthylendiamintriessigsäure | 46 | 150 | C |
| 10 | Phytinsäure [Monoester aus 6 Molen Phosphorsäure und 1 Mol Inosit = Cyclohexan-1,2,3,4,5,6-hexol, Bruttoformel : $C_6H_6(OPO_3H_2)_6$] | 113 | 208 | C |

Beispiele 11 bis 16

Es wurden Mischungen von verschiedenen der aufgeführten Säuren mit einer Gesamtkonzentration von 1,0 % hergestellt, diese Mischungen wurden als Elektrolyten im erfindungsgemäßen Verfahren eingesetzt. Die Elektrolyse wurde mit 30 V Gleichstrom über einen Zeitraum von 30 sec bei Raumtemperatur an zuvor entfetteten, mit einer Schleifmittelaufschlämmung gekörnten und geätzten Aluminiumplatten durchgeführt. Die Zusammensetzungen der Elektrolyten, die Schichtgewichte der Oxidschichten, die Reaktionszeiten mit $SnCl_2$ und das Verhalten beim trockenen Einfärberversuch sind im folgenden aufgeführt. In allen Fällen waren die Korrosionsbeständigkeit und die Hydrophilie sehr gut.

Beispiel 11

Elektrolyt 1 : 0,75 % Hydroxyethyl-äthylendiamin-triessigsäure, Elektrolyt 2 : 0,25 % Polystyrolsulfonsäure, Schichtgewicht : 440 mg/m², $SnCl_2$-Test : 107 sec, Färbetest : CT.

9

# 0 050 216

## Beispiel 12

Elektrolyt 1 : 0,75 % Äthylendiamintetraessigsäure, Elektrolyt 2 : 0,25 % Polyvinylphosphonsäure, Schichtgewicht : 401 mg/m², $SnCl_2$-Test : 112 sec, Färbetest : C.

## Beispiel 13

Elektrolyt 1 : 0,5 % Polyvinylphosphonsäure, Elektrolyt 2 : 0,5 % Phytinsäure, Schichtgewicht : 392 mg/m², $SnCl_2$-Test : 123 sec, Färbetest : C.

## Beispiel 14

Elektrolyt 1 : 0,75 % Polyvinylphosphonsäure, Elektrolyt 2 : 0,25 % Phytinsäure, Schichtgewicht : 378 mg/m², $SnCl_2$-Test : 131 sec, Färbetest : C.

## Beispiel 15

Elektrolyt 1 : 0,5 % Phytinsäure, Elektrolyt 2 : 0,5 % Vinylmethyläther/Maleinsäureanhydrid-Copolymerisat, hydrolysiert, Schichtgewicht : 388 mg/m², $SnCl_2$-Test : 125 sec, Färbetest : C.

## Beispiel 16

Elektrolyt 1 : 0,5 % Polystyrolsulfonsäure, Elektrolyt 2 : 0,5 % Phytinsäure, Schichtgewicht : 411 mg/m², $SnCl_2$-Test : 98 sec, Färbetest : CT.

## Beispiel 17

Nach einem Verfahren in Analogie zu Beispiel 1 wurde bei 30 V Gleichstrom innerhalb von 60 sec eine anodische Schicht in einer wäßrigen 1 %igen Phytinsäure-Lösung erzeugt. Bei der Untersuchung unter dem Durchstrahlungs-Elektronenmikroskop zeigte die isolierte Oxidschicht bei 55 000-facher Vergrößerung eine glatte und offensichtlich strukturlose Oberfläche ohne sichtbar Porosität.

## Beispiel 18

Flächige Proben aus der Aluminium-Legierung 3003 mit den Abmessungen 18,3 cm · 17,8 cm · 0,03 cm wurden für die elektrolytische Behandlung nach den Angaben des Beispiels 1 vorbereitet. Nach dem Ätzen (während 10 bis 15 sec) wurde eine Probe mit Wasser abgewaschen und im Luftstrom getrocknet. Die Probe wurde an eine leitfähige Schiene angeklemmt und im Abstand von jeweils etwa 20 cm zwischen zwei Bleiplatten in eine isolierte Wanne eingehängt. Die Wanne enthielt eine wäßrige Lösung mit einem Gehalt von 100 g/l $H_3PO_4$ und 1 % Phytinsäure. Mittels einer Gleichspannungsquelle wurden das Aluminium als Anode und die Bleielektroden als Kathoden geschaltet. Das Bad hatte Umgebungstemperatur, blieb jedoch für die Dauer des Versuchs auf 22 °C ± 2 °C. Der Strom wurde mit einer voreingestellten Gleichspannung von 16 V eingeschaltet, die Elektrolysebehandlung dauerte 60 sec. Der Kontakt wurde unterbrochen, die Platte aus dem Bad genommen, mit Wasser abgespült und abschließend trockengetupft. Um die Hydrophilie der Oberfläche zu prüfen, wurde eine Druckfarbe mit starken Abriebeigenschaften ohne Verwendung von Wasser mit einem trockenen Applikator aufgetragen. Die Platte war wesentlich sauberer als herkömmlich hergestellte Platten, wenn sie sofort trocken eingefärbt und mit Wasser abgewaschen wurden. Auf die Oberfläche wurden einige Tropfen Kaliumzinkat-Lösung gegeben, die Testdauer betrug 100 sec bis zum Umschlagpunkt.

Schließlich wurde die Platte noch mit einer lichtempfindlichen Lösung beschichtet, die ein Pigment, ein Polyvinylformal-Bindemittel und ein Diazonium-Kondensationsprodukt gemäß US-PS 3 867 147 enthielt. Nach Belichten durch eine Negativvorlage und Entwickeln mit einem wäßrig-alkoholischen Entwickler blieben der Hintergrund sauber und ein intensives Bild in den belichteten Bereichen zurück. Mit einem 21-stufigen Stauffer-Stufenkeil wurde so belichtet, daß nach dem Entwickeln mit einem wäßrig-alkoholischen Entwickler 6 Stufen voll geschwärzt waren. Die Untersuchung der isolierten Aluminiumoxidschicht bei 55 000-facher Vergrößerung unter dem Durchstrahlungs-Elektronenmikroskop zeigte eine glatte Oberfläche ohne sichtbare Porosität.

## Ansprüche

1. Verfahren zur anodischen Oxidation von platten-, folien- oder bandförmigem Material aus Aluminium oder seinen Legierungen in einem wäßrigen, mindestens eine Säure enthaltenden Elektrolyten, gegebenenfalls nach vorhergehender mechanischer, chemischer und/oder elektrochemischer Aufrauhung, dadurch gekennzeichnet, daß als Säure Phytinsäure, Nitrilotriessigsäure, Phosphorsäure-

10

mono(dodecyloxy-polyoxyäthylen)ester, Tridecyl-benzolsulfonsäure, Dinitro-stilben-disulfonsäure, Dodecyl-naphthalin-disulfonsäure, Dinonyl-naphthalin-disulfonsäure, Di-n-butyl-naphthalin-disulfonsäure, Äthylendiamintetraessigsäure, Hydroxyäthyl-äthylendiamin-triessigsäure oder ein Gemisch aus zwei oder mehreren dieser Säuren eingesetzt wird.

2. Verfahren nach Anspruch 1, dadurch gekennzeichnet, daß der wäßrige Elektrolyt 0,05 bis 30 Gew.-% der Säure(n) enthält.

3. Verfahren nach Anspruch 1 oder 2, dadurch gekennzeichnet, daß der wäßrige Elektrolyt mindestens 0,5 Gew.-% der Säure(n) enthält.

4. Verfahren nach einem der Ansprüche 1 bis 3, dadurch gekennzeichnet, daß der wäßrige Elektrolyt zusätzlich Säure aus der Gruppe Phosphorsäure, Phosphorige Säure und einem Gemisch aus Phosphorsäure und Schwefelsäure oder Phosphoriger Säure enthält.

5. Verfahren nach Anspruch 4, dadurch gekennzeichnet, daß der wäßrige Elektrolyt 10 bis 200 g/l, insbesondere 20 bis 150 g/l, der anorganischen Säure(n) enthält.

6. Verfahren nach einem der Ansprüche 1 bis 5, dadurch gekennzeichnet, daß vor der anodischen Oxidation in dem eine der obigen Säuren enthaltenden Elektrolyten zusätzlich eine anodische Oxidation in wäßriger Schwefelsäure-Lösung als Elektrolyten durchgeführt wird.

7. Verfahren nach einem der Ansprüche 1 bis 3 oder 6, dadurch gekennzeichnet, daß die anodische Oxidation mit einer Spannung von 1 bis 30 V, bei einer Stromdichte von 1 bis 5 A/dm$^2$, in einer Zeitspanne von 0,08 bis 5 min und bei einer Temperatur von − 2 °C bis 60 °C durchgeführt wird.

8. Verfahren nach einem der Ansprüche 1 bis 3, 6 oder 7, dadurch gekennzeichnet, daß die anodische Oxidation mit einer Spannung von mindestens 5 V, bei einer Stromdichte von 1,3 bis 4,3 A/dm$^2$, in einer Zeitspanne von 0,16 bis 1 min und bei einer Temperatur von 10 °C bis 35 °C durchgeführt wird.

9. Verfahren nach Anspruch 4 oder 5, dadurch gekennzeichnet, daß die anodische Oxidation mit einer Spannung von 5 bis 40 V, bei einer Stromdichte von 0,2 bis 6 A/dm$^2$, in einer Zeitspanne von 0,08 bis 5 min und bei einer Temperatur von − 2 °C bis 60 °C durchgeführt wird.

10. Verwendung des nach dem Verfahren gemäß einem der Ansprüche 1 bis 9 anodisch oxidierten Materials als Trägermaterial bei der Herstellung von eine lichtempfindliche Schicht tragenden Druckplatten.

11. Verwendung nach Anspruch 10, dadurch gekennzeichnet, daß die gegebenenfalls angefärbten lichtempfindlichen Schichten Diazoverbindungen, Diazochinone, Diazomischkondensate oder photopolymerisierbare Verbindungen enthalten.

## Claims

1. Process for the anodic oxidation of a material in the form of a sheet, a foil or a web comprising aluminium or an alloy thereof, in an aqueous electrolyte containing at least one acid if appropriate after a preceding mechanical, chemical and/or electrochemical roughening process, wherein the acid used comprises phytic acid, nitrilotriacetic acid, the mono(dodecyloxy-polyoxyethylene) ester of phosphoric acid, tridecyl-benzenesulfonic acid, dinitro-stilbene-disulfonic acid, dodecyl-naphthalene-disulfonic acid, dinonyl-naphthalene-disulfonic acid, di-n-butyl-naphthalene-disulfonic acid, ethylenediamine-tetraacetic acid, hydroxyethyl-ethylenediamine-triacetic acid or a mixture of at least two of these acids.

2. A process as claimed in claim 1, wherein the aqueous electrolyte contains from 0.05 to 30 % by weight of the acid(s).

3. A process as claimed in claim 1 or claim 2, wherein the aqueous electrolyte contains at least 0.5 % by weight of the acid(s).

4. A process as claimed in any of claims 1 to 3, wherein the aqueous electrolyte additionally contains an acid, selected from the group consisting of phosphoric acid, phosphorous acid and a mixture of phosphoric acid and sulfuric acid or phosphorous acid.

5. A process as claimed in claim 4, wherein the aqueous electrolyte contains from 10 to 200 g/l particularly from 20 to 150 g/l, of the inorganic acid(s).

6. A process as claimed in any of claims 1 to 5, wherein an anodic oxidation in an electrolyte comprising an aqueous solution of sulfuric acid is additionally performed, before the anodic oxidation in an electrolyte which contains one of the above-indicated acids.

7. A process as claimed in any of claims 1 to 3 or 6, wherein anodic oxidation is carried out at a voltage from 1 to 30 V, at a current density from 1 to 5 A/dm$^2$, during a time from 0.08 to 5 minutes, and at a temperature from − 2 °C to 60 °C.

8. A process as claimed in any of claims 1 to 3, 6 or 7, wherein anodic oxidation is carried out at a voltage of at least 5 V, at a current density from 1.3 to 4.3 A/dm$^2$, during a time from 0.16 to 1 minute, and at a temperature from 10 °C to 35 °C.

9. A process as claimed in claim 4 or claim 5, wherein anodic oxidation is carried out at a voltage from 5 to 40 V, at a current density from 0.2 to 6 A/dm$^2$, during a time from 0.08 to 5 minutes, and at a temperature from − 2 °C to 60 °C.

10. Use of the material which has been anodically oxidized according to any of claims 1 to 9, as a support material in the manufacture of printing plates which carry a light-sensitive coating.

11. Use as claimed in claim 10, wherein the optionally dyed light-sensitive coatings comprise diazo compounds, diazoquinones, mixed diazo condensates or photopolymerizable compounds.

**Revendications**

1. Procédé d'oxydation anodique de matériaux en aluminium ou ses alliages sous forme de plaques, de feuilles ou de bandes dans un électrolyte aqueux contenant au moins un acide, éventuellement après l'avoir rendu rugueux au préalable par voie mécanique, chimique et/ou électrochimique, caractérisé en ce que comme acide on utilise l'acide phytique, l'acide nitrilotriacétique, le mono (dodécyloxy-polyoxyéthylène) ester de l'acide phosphorique, l'acide tridécyl-benzène sulfonique, l'acide dinitro-stilbène disulfonique, l'acide dodécyl-naphtalène disulfonique, l'acide dinonyl-naphtalène disulfonique, l'acide di-n-butyl-naphtalène disulfonique, l'acide éthylènediamine tétraacétique, l'acide hydroxy-éthyl-éthylènediamine triacétique ou un mélange de deux ou plus de ces acides.

2. Procédé selon la revendication 1, caractérisé en ce que l'électrolyte aqueux contient de 0,05 à 30 % en poids du ou des acides.

3. Procédé selon la revendication 1 ou 2, caractérisé en ce que l'électrolyte aqueux contient au moins 0,5 % en poids du ou des acides.

4. Procédé selon l'une des revendications 1 à 3, caractérisé en ce que l'électrolyte aqueux contient en outre un acide choisi parmi l'acide phosphorique, l'acide phosphoreux, et un mélange d'acide phosphorique et d'acide sulfurique ou d'acide phosphoreux.

5. Procédé selon la revendication 4, caractérisé en ce que l'électrolyte aqueux contient de 10 à 200 g/l, en particulier de 20 à 150 g/l du ou des acides minéraux.

6. Procédé selon l'une des revendications 1 à 5, caractérisé en ce que, avant l'oxydation anodique dans l'électrolyte contenant l'un des acides ci-dessus, on effectue en plus une oxydation anodique dans une solution aqueuse d'acide sulfurique en tant qu'électrolyte.

7. Procédé selon l'une des revendications 1 à 3 ou 6, caractérisé en ce que l'oxydation anodique est effectuée avec une tension de 1 à 30 V, à une densité de courant de 1 à 5 A/dm$^2$, pendant de 0,08 à 5 minutes, et à une température de $-$ 2 à 60 °C.

8. Procédé selon l'une des revendications 1 à 3, 6 ou 7, caractérisé en ce que l'oxydation anodique est effectuée avec une tension d'au moins 5 V, à une densité de courant de 1,3 à 4,3 A/dm$^2$, pendant de 0,16 à 1 minute et à une température de 10 à 35 °C.

9. Procédé selon la revendication 4 ou 5, caractérisé en ce que l'oxydation anodique est effectuée avec une tension de 5 à 40 V, à une densité de courant de 0,2 à 6 A/dm$^2$, pendant de 0,08 à 5 minutes et à une température de $-$ 2 à 60 °C.

10. Utilisation du matériau oxydé anodiquement par le procédé selon l'une des revendications 1 à 9, comme matériau de support pour la fabrication de plaques d'impression portant une couche sensible à la lumière.

11. Utilisation selon la revendication 10, caractérisé en ce que les couches sensibles à la lumière éventuellement colorées contiennent des composés diazoïques, des diazoquinones, des produits de condensation diazoïques mixtes ou des composés photopolymérisables.